# EUROPÄISCHE PATENTSCHRIFT

(11) **EP 2 538 166 B1**
(45) Veröffentlichungstag und Bekanntmachung des Hinweises auf die Patenterteilung: **19.09.2018**
(21) Anmeldenummer: 12004440.9
(22) Anmeldetag: 13.06.2012
(51) Int. Cl.: F41G 3/02, F41G 3/06, G01S 7/00, G01S 17/02

(54) **Feuerleiteinrichtung**
Fire control device
Dispositif de conduite de tir

(30) Priorität: 22.06.2011 DE 102011105303
(43) Veröffentlichungstag der Anmeldung: 26.12.2012
(73) Patentinhaber: Diehl Defence GmbH & Co. KG, 88662 ÜBERLINGEN (DE)
(72) Erfinder: Gundel, Bernd, 91284 Neuhaus (DE)
(74) Vertreter: Diehl Patentabteilung

(56) Entgegenhaltungen:
- EP-A1- 0 373 283
- EP-A2- 0 785 406
- WO-A1-01/77999
- WO-A2-2007/133277
- DE-A1-102004 034 267
- US-A- 3 824 699
- US-A1- 2008 290 164
- US-A1- 2009 320 348
- US-A1- 2011 121 159
- US-B2- 7 637 198

## Beschreibung

Die Erfindung betrifft eine Feuerleiteinrichtung für wenigstens eine von Hand auszurichtende Waffe, insbesondere einen Mörser.

Aus der EP 0 785 406 A2 ist ein Verfahren zur Feuerleitung für einen Granatwerfer bekannt. Dabei visiert der Grenadier mittels eines an der Waffe montierten Laserabstandsmessgeräts das zu bekämpfende Ziel an. Damit werden die Entfernung und der Azimutwinkel des Ziels bestimmt. Die Feuerleiteinrichtung des Granatwerfers berechnet aus diesen Daten eine ballistische Lösung, insbesondere den erforderlichen Elevationswinkel des Granatwerfers. Dieser zum Treffen des Ziels erforderliche Elevationswinkel wird dem Grenadier über ein Display angezeigt und der Grenadier richtet den Granatwerfer entsprechend aus. Sobald der Grenadier über das Display mitgeteilt bekommt, dass der erforderliche Elevationswinkel und der erforderliche Azimutwinkel erreicht sind, feuert der Grenadier den Granatwerfer ab.

Ähnliche Verfahren zur Feuerleitung für einen Granatwerfer sind aus der WO 01/77999 A1, aus der US 7 637 198 B2 und aus der EP 0 373 283 A1 bekannt.

Aus der WO 2007/133277 A2 ist ein Verfahren zur Berechnung einer ballistischen Lösung bekannt.

Zur Durchführung schneller und gezielter Aktionen werden häufig kleine Infanterieeinheiten oder Kampfgruppen gebildet, die aus wenigen Soldaten, in der Regel einem Truppführer und vier bis acht Soldaten, bestehen. Ein oder mehrere Soldaten führen häufig sogenannte Commando-Mörser mit sich, also leichtbauende Mörser mit einem Gewicht von meist weniger als 7 kg, die von einem einzelnen Soldaten getragen und eingesetzt werden können. Neben dem geringen Gewicht ist der Vorteil eines solchen Commando-Mörsers, dass er bereits mit einer geladenen Patrone transportiert werden kann. Dies beruht darauf, dass an dem Commando-Mörser ein separater Auslöser ist, der zum Abschuss der Mörser-Patrone zu betätigen ist. Zum Schuss wird der Mörser über eine geeignete Bodenplatte am Boden aufgestellt, wonach der Mörser-Schütze den Mörser von Hand ausrichten muss. Am Mörser befindet sich eine Einrichtung zur Erfassung der Elevation, üblicherweise mit einer einstellbaren Graduierung und zugeordneter Libelle, anhand welcher der Schütze einen gewünschten Elevationswinkel, also den Winkel, den der Mörser zur Horizontalen einnimmt, einstellen kann. Der Azimutwinkel, also der seitliche Ausrichtwinkel, muss vom Schützen jedoch geschätzt werden. Der Schütze hält hierbei den am Boden abgestützten Mörser mit der einen Hand im hinteren Bereich, wo sich der Abzug befindet, und mit der anderen Hand am vorderen Rohrende des Mörsers. Er schwenkt nun den Mörser in die gewünschte, geschätzte Richtung. Zum besseren Abschätzen der Seitenrichtung wird dabei manchmal auch ein abgespreizter Daumen als Visier verwendet.

Es ist offensichtlich, dass dieses Ausrichtverfahren nicht sehr genau ist und zwangsläufig nicht die gewünschte Schusspräzision, die heutzutage gefordert wird, bietet. Selbst ein guter Mörser-Schütze benötigt ca. 3 Schüsse, bis er mit seinen Granaten im Ziel liegt.

Der Erfindung liegt damit das Problem zugrunde, eine Feuerleiteinrichtung für eine solche von Hand auszurichtende Waffe, insbesondere in Form eines oben beschriebenen Commando-Mörsers anzugeben, die eine genauere Ausrichtung der Waffe auf ein gewünschtes Ziel ermöglicht.

Zur Lösung dieses Problems ist erfindungsgemäß eine Feuerleiteinrichtung gemäß Anspruch 1 vorgesehen. Vorteilhafte Ausführungsformen der Erfindung sind in den abhängigen Ansprüchen angegeben.

Der Erfindung liegt der Gedanke zugrunde, gestützt auf verschiedene Messwerte, zwei Sollwinkel, nämlich einen Soll-Azimutwinkel und einen Soll-Elevationswinkel, zum Ziel zu bestimmen, sowie zwei entsprechende Ist-Winkel, nämliche einen Ist-Azimutwinkel und einen Ist-Elevationswinkel, jeweils bezogen auf die handgeführte Waffe. Ein Vergleich zwischen dem jeweiligen Ist-Winkel und dem zugeordneten Soll-Winkel gibt an, inwieweit die Waffe korrekt ausgerichtet ist, wobei die genaue Ausrichtung dem Schützen angezeigt wird. Infolge der Messung beziehungsweise Ermittlung der entsprechenden Winkel und die Anzeige bei gegebener Winkelübereinstimmung, also korrekter Ausrichtung, ermöglicht es dem Schützen, die Waffe wesentlich genauer auszurichten als es für ihn insbesondere im Hinblick auf die Seitenausrichtung bisher möglich war.

Die erfindungsgemäße Feuerleiteinrichtung umfasst eine optische Visiereinrichtung, beispielsweise ein Wärmebildgerät oder Ähnliches, die in jedem Fall ermöglicht, ein gewünschtes Ziel optisch sehen und betrachten zu können, und die es ermöglicht, ein gewünschtes Ziel zu definieren. Die Visiereinrichtung umfasst eine Einrichtung zum Messen der Entfernung zwischen der Visiereinrichtung und dem ausgewählten Ziel, beispielsweise eine Lasermesseinrichtung, die hochgenau die Entfernung bestimmen kann. Des Weiteren umfasst die Visiereinrichtung eine Einrichtung zur Bestimmung eines Soll-Azimutwinkels, der an der Waffe einzustellen ist. Dem liegt die Überlegung zugrunde, dass die Feuerleiteinrichtung für die eingangs beschriebenen kleinen Kampfgruppen vorgesehen ist, die eine solche von Hand auszurichtende Waffe wie beispielsweise den beschriebenen Commando-Mörser mit sich führt. Üblicherweise beträgt der Abstand zwischen dem Truppführer, der die optische Visiereinrichtung bedient und das gegnerische Ziel hierüber definiert, und dem Mörser-Schützen nur wenige, häufig zwei - drei Meter, so dass die Position der Visiereinrichtung und die Position des Mörser-Schützen nahezu zusammenfallen, insbesondere bezogen auf den Abstand zum Ziel, der in der Regel mehrere hundert Meter und mehr beträgt. Das heißt, dass es somit möglich ist, über eine visiereinrichtungsseitige Einrichtung einen Soll-Azimutwinkel zum ausgewählten Ziel in einem definierten Koordinatensystem zu bestimmen, der als Soll-Ausrichtwinkel für die quasi unmittelbar danebenstehende Waffe dient.

Neben dem Soll-Azimutwinkel ist als zweiter Raumwinkel der Soll-Elevationswinkel zu ermitteln, was über eine geeignete Recheneinrichtung erfolgt, die den waffenseitig auszurichtenden Soll-Elevationswinkel anhand der gemessenen Entfernung zum Ziel bestimmt. Diese ballistische Recheneinrichtung kann, worauf nachfolgend noch eingegangen wird, entweder auch in der Visiereinrichtung integriert sein, sie kann aber auch waffenseitig vorgesehen sein.

Unabhängig davon, ob nun der Soll-Elevationswinkel bereits visiereinrichtungsseitig ermittelt wird, oder nur die Entfernung, sind in jedem Fall Kommunikationsmittel vorgesehen, die es ermöglichen, dass seitens der Visiereinrichtung ermittelte Daten an die Waffe übertragen werden können. Die Kommunikationsmittel müssen störungsfrei übertragen können, wobei die Übertragungsstrecke nur wenige Meter beträgt, so dass sie entsprechend ausgelegt werden können.

Waffenseitig liegen folglich als Basis-Ausrichtvorgaben der Soll-Azimutwinkel und der Soll-Elevationswinkel vor. Um nun die entsprechenden Ist-Winkel an der Waffe zu bestimmen, ist waffenseitig eine Einrichtung zur Bestimmung des Ist-Azimutwinkels der im Raum ausgerichteten Waffe vorgesehen, wobei der Ist-Azimutwinkel im gleichen Koordinatensystem bestimmt wird, in dem auch der Soll-Azimutwinkel über die Visiereinrichtung bestimmt wird. Beispielsweise kann als visiereinrichtungs- und waffenseitig integrierte Einrichtung jeweils ein elektronischer Kompass verwendet werden, bei dem definitionsgemäß beispielsweise die Null-Grad-Richtung exakt nach Osten ausgerichtet ist, so dass ein definierte Koordinatensystem gegeben ist und folglich der Soll- und der Ist-Azimutwinkel jeweils in dem gleichen Koordinatensystem gemessen und miteinander vergleichbar ist.

Weiterhin ist waffenseitig eine Einrichtung zur Bestimmung des Ist-Elevationswinkels der im Raum ausgerichteten Waffe vorhanden, beispielsweise in Form eines geeigneten Neigungsmessers, der eine genaue Winkelbestimmung ermöglicht.

Sowohl die Soll- als auch die Ist-Winkel werden nach ihrer Ermittlung über eine waffenseitig vorgesehene Steuerungs- oder Recheneinrichtung, also einer Vergleichseinrichtung, miteinander verglichen. Der Schütze erhält nun eine Information dahingehend, inwieweit der jeweilige Ist-Winkel mit dem Soll-Winkel übereinstimmt, was über ein geeignetes Anzeigemittel erfolgt. Die Anzeige kann optisch und/oder akustisch erfolgen, solange sie geeignet ist, dem Schützen die Information zu geben, dass die Ausrichtung korrekt ist, oder in welche Richtung die Waffe zu bewegen ist, um einen Ist-Winkel auf den Soll-Winkel zu führen. Erhält er die Information, kann der Schuss abgegeben werden, wobei die Schusspräzision gegenüber dem bisherigen, ungenauen Ausrichten insbesondere bezüglich der Seitenablage deutlich verbessert ist, nachdem die Ausrichtung und die Schussfreigabe auf Grundlage entsprechender Messwerte und Winkelberechnungen vorgenommen wurde.

Die entsprechenden Messwerte respektive Winkelberechnungen werden selbstverständlich über geeignete Steuerungseinrichtungen beziehungsweise entsprechenden Recheneinrichtungen vorgenommen. Während wie beschrieben der Azimutwinkel über an der Visiereinrichtung und der Waffe vorgesehene elektronische Kompasse und dergleichen genauestens ermittelt werden kann, wird der Soll-Elevationswinkel mittels eines geeigneten ballistischen Rechners anhand der gemessenen Entfernung zum Ziel bestimmt. Da noch dazu die Datenübertragung über geeignete Kommunikationsmittel automatisch erfolgt, sind folglich entsprechende Zielansprachen des Truppführers, die ebenfalls als Fehlerquelle für eine Fehlausrichtung sein können, nicht erforderlich.

Wie bereits beschrieben, kann die ballistische Recheneinrichtung zur Ermittlung des Soll-Elevationswinkels an der optischen Visiereinrichtung vorgesehen sein, wobei als Daten dann der Soll-Azimutwinkel und der Soll-Elevationswinkel, weil an der Visiereinrichtung selbst ermittelt, über die Kommunikationsmittel an die Waffe übertragen und dort verarbeitet werden.

Alternativ ist es denkbar, dass die ballistische Recheneinrichtung an der Waffe vorgesehen ist, wobei als Daten von der Visiereinrichtung der Soll-Azimutwinkel und die gemessene Entfernung übertragen werden. Die ballistische Recheneinrichtung an der Waffe ermittelt sodann ihrerseits aus der Entfernung den Soll-Elevationswinkel, so dass für den weiteren Richtvorgang wiederum beide Soll-Winkel waffenseitig vorliegen.

Wenngleich grundsätzlich davon ausgegangen werden kann, dass der Schütze unmittelbar benachbart zum Truppführer steht, mithin also die auszurichtende Waffe unmittelbar benachbart zur Visiereinrichtung steht, und folglich die ermittelten Soll-Winkel, die ja bezogen auf Messwerte seitens der Visiereinrichtung erfasst werden, ohne weiteres der Ausrichtung der benachbart dazu stehenden Waffe zugrunde gelegt werden können, sieht eine Weiterbildung der Erfindung zur noch weitergehenden Präzisierung der Ausrichtung vor, dass bei Ermittlung des Soll-Azimutwinkels und/oder des Soll-Elevationswinkels ein eine Winkelkorrektur im Hinblick auf den gegebenen Abstand der Visiereinrichtung zur Waffe erwirkender Korrekturfaktor berücksichtigt wird, wobei die Berücksichtigung des Korrekturfaktors gegebenenfalls wählbar ist. Gemäß dieser Erfindungsausgestaltung ist es also möglich, eine Korrektur der Soll-Winkel entweder von Haus aus einzurechnen, oder bei Bedarf vorzunehmen. Der Truppführer mit der Visiereinrichtung, häufig auch "Spotter" genannt, schätzt den Abstand zur Waffe. Kommt er dabei zu dem Ergebnis, dass der Abstand größer ist als beispielsweise maximal drei Meter, so kann er die Berücksichtigung des Korrekturfaktors in einem geeigneten, an der Visiereinrichtung darstellbaren Menü anwählen. Sodann werden automatisch die entsprechenden Soll-Winkel korrigiert, soweit sie dortseits ermittelt werden. Wird der Soll-Elevationswinkel an der Waffe ermittelt, so kann der Schütze eine entsprechende Korrektur vornehmen. Im Rahmen dessen wäre es sogar denkbar, verschiedenen Abständen verschiedene Korrekturfaktoren zuzuordnen, so dass beispielsweise bei einem Abstand von vier Metern ein erster Korrekturwert, bei einem geschätzten Abstand von fünf Metern ein zweiter Korrekturwert usw. berücksichtigt und angewählt werden kann. Die Korrektur kann auch richtungsabhängig erfolgen, je nach dem, ob der Schütze nun rechts oder links von der Visiereinrichtung steht, wobei bei dieser Erfindungsausgestaltung davon ausgegangen wird, dass der Schütze in der Regel seitlich zur Visiereinrichtung positioniert ist. Ist er vor der Visiereinrichtung, so kann gleichermaßen eine Korrektur erfolgen. Zweckmäßig wäre dann aber eine Auswahlmöglichkeit hinsichtlich der Position des Schützen relativ zur Visiereinrichtung, so dass die dortige Recheneinrichtung automatisch einen korrekten Korrekturwert zuordnen kann. Diese Erfindungsausgestaltung ist jedoch grundsätzlich optional, da davon ausgegangen wird, dass bereits von Haus aus eine sehr hohe Präzision respektive Genauigkeit der Winkelermittlung in Bezug auf die Position des Schützen gegeben ist.

Die Einrichtung zur Entfernungsmessung ist zweckmäßigerweise eine Lasermesseinrichtung, die die Entfernung hochgenau bestimmt. Der Truppführer sieht in der Visiereinrichtung ein entsprechendes Ziel und markiert dieses über einen einblendbaren Cursor oder dergleichen, woraufhin die Entfernungsmesseinrichtung unmittelbar den Abstand bestimmt. Gestützt hierauf kann sodann die Ermittlung des Soll-Elevationswinkels über die ballistische Recheneinrichtung erfolgen.

Die jeweilige Einrichtung zur Bestimmung des Ist-Azimutwinkels und des Soll-Azimutwinkels ist wie beschrieben bevorzugt ein elektronischer Kompass. Derartige elektronische Kompasse arbeiten von Haus aus im gleichen Koordinatensystem, so dass die visiereinrichtungsseitig und waffenseitig ermittelten Winkel komplett vergleichbar sind.

Die Einrichtung zur Bestimmung des Ist-Elevationswinkels ist zweckmäßigerweise ein elektronischer Neigungssensor, der den Winkel zwischen Rohr und der Horizontalen hochpräzise ermittelt.

Wie beschrieben ist an der Waffe eine entsprechende Anzeigeeinrichtung vorgesehen, die dem Schützen die Information gibt, ob die Ist-Winkel den Soll-Winkeln entsprechen, wobei diese Anzeige bevorzugt winkelspezifisch ist. Das heißt, der Schütze erhält eine Information, ob zum einen der Azimutwinkel übereinstimmt, und eine weitere Information, ob der Elevationswinkel übereinstimmt. Hierüber kann der Schütze genauestens erkennen, welcher Winkel noch zu korrigieren ist. Dabei wird bevorzugt jedem Soll-Winkel eine gewisse Toleranz zugeordnet, beispielsweise +/- 0,25° oder +/-0,5°. Liegt folglich der jeweilige Ist-Winkel innerhalb dieses Toleranzbereichs, so wird seitens der Anzeigeeinrichtung angezeigt, dass eine Winkelübereinstimmung gegeben ist, mithin also die Ausrichtung des jeweiligen Winkels korrekt ist.

Dabei sind unterschiedliche Ausgestaltungen der Anzeigeeinrichtung denkbar. Die optische Anzeigeeinrichtung kann beispielsweise das Erreichen des Soll-Azimutwinkels und des Soll-Elevationswinkels durch einen Farbwechsel und/oder durch Symbole anzeigen. Ein Farbwechsel kann beispielsweise durch einen Wechsel von rot nach grün in einem kleinen Display oder über geeignete Leuchtdioden oder Ähnliches erfolgen. Auch eine Anzeige über Symbole ist denkbar, beispielsweise in einem kleinen Display durch Pfeildarstellungen, wobei eine Azimutwinkelausrichtung durch Pfeile dargestellt wird, die nach rechts und links zeigen, während eine Elevationswinkelausrichtung durch Pfeile, die nach vorne oder hinten zeigen, dargestellt wird. Je nach Pfeilrichtung ist es erforderlich, das Rohr nach rechts oder links respektive nach oben oder unten zu schwenken, um den Ist-Winkel nachzuführen. Denkbar wäre auch eine kumulierte Anzeige der Gestalt, dass in einem Display mehrere konzentrische Kreise gezeigt sind, sowie ein beweglicher Punkt, dessen Seitenversatz zur Mitte die Abweichung des Azimutwinkels zeigt, und dessen Versatz nach vorne und hinten zur Darstellungsmitte eine Abweichung des Elevationswinkels zeigt. Der Schütze muss nun die Waffe so bewegen, dass der Punkt im mittleren Kreis ist, sämtliche Winkel stimmen dann überein. Gekoppelt werden kann selbstverständlich diese Symboldarstellung (und natürlich auch die Pfeildarstellung) wiederum mit einem geeigneten Farbwechsel, beispielsweise indem die Pfeilfarbe sich ändert oder entsprechend andersfarbige Symbole gezeigt werden etc.

Eine akustische Anzeigeeinrichtung kann das Erreichen des Soll-Azimutwinkels und des Soll-Elevationswinkels beispielsweise über einen Wechsel der Tonfrequenz oder der Tonfolge anzeigen. Für den Azimutwinkel und den Elevationswinkel können unterschiedliche Tonlagen gegeben sein, so dass der Schütze die akustische Information dem jeweiligen Winkel zuordnen kann. Beispielsweise kann die Frequenz variiert werden, von einem tiefen Ton bei größerer Abweichung hin zu einem hohen Ton bei Übereinstimmung, wobei die Frequenzänderung linear oder stufenweise erfolgen kann. Auch kann die Tonfolge variiert werden, von einer langsamen Tonfolge bei größerer Abweichung hin zu einer immer schnelleren Tonfolge bei Annäherung, bis hin beispielsweise zu einem Dauerton bei Übereinstimmung. Auch hier sind viele Ausgestaltungen denkbar. Grundsätzlich besteht selbstverständlich die Möglichkeit, die akustische und die optische Anzeige zu koppeln, mithin also beide Anzeigen vorzusehen.

Eine der wesentlichen Einrichtungen des erfindungsgemäßen Feuerleitsystems ist die Kommunikationseinrichtung, die an der Visiereinrichtung und an der Waffe vorgesehen ist. Diese muss wie beschrieben nur eine sehr kurze Reichweite haben und soll so störungssicher wie möglich sein. Denkbar ist es, an der Visiereinrichtung und an der Waffe entsprechende Transponder vorzusehen oder aber geeignete Bluetooth-Schnittstellen und Ähnliches. Diese Aufzählung ist nicht abschließend, es können auch andere Kommunikationseinrichtungen vorgesehen werden, solange sie eine Datenübertragung zulassen.

Wie einleitend beschrieben kann die kleine Kampfgruppe unter Umständen auch mehrere Commando-Mörser respektive von Hand auszurichtende Schusswaffen umfassen. Um mit den einzelnen Waffen unterschiedliche Ziele bekämpfen zu können, oder um mit allen Waffen ein gemeinsames Ziel bekämpfen zu können, gleichwohl aber zu jeder Waffe ein Höchstmaß an Genauigkeit hinsichtlich der Ausrichtung sicherzustellen, sieht eine zweckmäßige Weiterbildung der Erfindung vor, dass an der Visiereinrichtung ein Auswahlmittel zum Auswählen einer bestimmten Waffe aus mehreren wählbaren Waffen, zu denen über entsprechende Kommunikationseinrichtungen eine Datenübertragung möglich ist, vorgesehen ist. Der Truppführer kann also über die Visiereinrichtung, beispielsweise über in die sichtbare Bilddarstellung einblendbare Icons oder dergleichen, die jeweils anzusprechende Waffe auswählen, beispielsweise "Mörser 1", "Mörser 2", "Mörser 3", und so dann dieser Waffe ein bestimmtes, von ihm über den bereits beschriebenen positionierbaren Cursor festlegbares Ziel zuordnen. Sodann werden die entsprechenden Winkel ermittelt respektive Daten zu eben dieser ausgewählten Waffe über die entsprechenden Kommunikationseinrichtung übertragen, so dass letztlich beide Soll-Winkel waffenseitig vorliegen und der Schütze die korrekte Ausrichtung vornehmen kann. Die Kommunikationseinrichtung an der Visiereinrichtung kann durch entsprechende Anwahl der gewünschten Waffe automatisch zur Kommunikation mit dieser Waffe konfiguriert werden, die Waffe selbst verfügt über eine eigene Kommunikationseinrichtung, die dann mit der entsprechend konfigurierten visiereinrichtungsseitigen Kommunikationseinrichtung zur Datenübertragung kommuniziert. Sind beispielsweise Transponder vorgesehen, so kann bei Anwahl der entsprechenden Waffe der entsprechende, zugeordnete Transponder an der Visiereinrichtung gewählt werden. Denkbar ist es auch, vor Beginn des Einsatzes die Kommunikationseinrichtung an der Visiereinrichtung mit den einzelnen waffenseitigen Kommunikationseinrichtungen zu registrieren, so dass die Kommunikationspfade entsprechend eingerichtet werden.

Wenn der Mörserschütze bei Folgeschüssen selbstständig eine Schussverbesserung durchführen will, auf Grundlage seiner eigenen Beobachtung der Trefferlage oder durch mündliche Einweisung über den vorgeschobenen Beobachter o. Ä., so hat er bei einem handgehaltenen Mörser das Problem, dass er während des Nachladens (speziell bei Ein-Mann-Bedienung) die vorausgegangenen Zielwinkel, also Seiten- und Höhenrichtung des Waffenrohres, ganz oder teilweise verlieren wird. Dadurch kann er bei seiner geplanten Schussverbesserung nicht mehr exakt auf der zuvor gewählten Einstellung der Richtdaten zurückgreifen.

Hierfür ist erfindungsgemäß die Speicherung der Soll-Winkeldaten des jeweils vorausgehenden Schusses in einer geeigneten waffenseitigen Speichereinrichtung vorgesehen, wodurch ein systematisches Verbessern der Trefferlage möglich wird, indem der Schütze zunächst die letzten Richtwinkel abruft und danach seine korrigierende Visierung hierauf aufbauend durchführt.

Im Unterschied zu vorbekannten Feuerleiteinrichtungen, die sich direkt an der betreffenden Waffe befinden, ist bei dem erfindungsgemäßen Verfahren aufgrund des Datenlinks zur optischen Visiereinrichtung des Truppführers vorteilhafterweise keine Sichtverbindung der jeweils angewählten Waffe zum Ziel erforderlich, wodurch die Waffenbedienung in einer gedeckten Stellung verweilen kann. Die Verwendung der separaten optischen Visiereinrichtung ermöglicht insbesondere eine wesentlich bessere Flexibilität und Beweglichkeit bei der Zieldetektion, als dies bei Verwendung einer direkt an der Waffe angebrachten optischen Visiereinrichtung erreichbar wäre, wobei im Falle eines Mörsers das Absuchen eines Zielgebietes mit waffenseitiger optischer Visiereinrichtung aus Handhabungsgründen nahezu unmöglich wäre.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Prinzipdarstellung einer erfindungsgemäßen Feuerleiteinrichtung,
- Fig. 2: eine Prinzipdarstellung eines Sichtbilds der Visiereinrichtung mit zugeordneter Soll-Winkelermittlung und einem Beispiel einer Anzeigeeinrichtung,
- Fig. 3: ein Flussdiagramm zur Erläuterung des Funktionsablaufs der erfindungsgemäßen Feuerleiteinrichtung, und
- Fig. 4: eine Prinzipdarstellung einer weiteren Anzeigemöglichkeit der Ausrichtvorgaben.

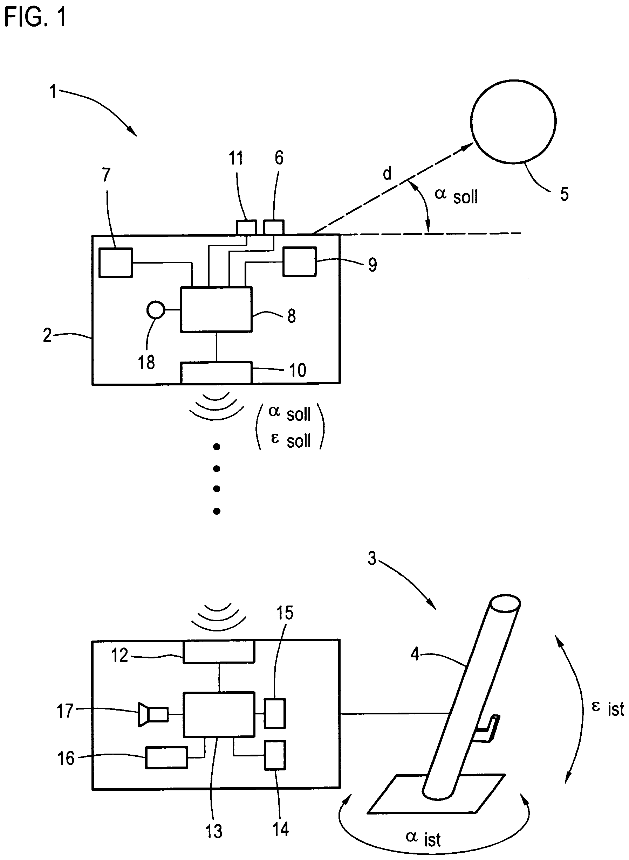

Fig. 1 zeigt eine erfindungsgemäße Feuerleiteinrichtung 1, umfassend eine optische Visiereinrichtung 2, sowie eine Waffe 3, hier in Form eines leichten, tragbaren Commando-Mörsers 4, der beziehungsweise dessen Rohr auf ein bestimmtes Ziel auszurichten ist.

Bei der optischen Visiereinrichtung kann es sich beispielsweise um ein Fernglas oder ein Wärmebildgerät handeln, in jedem Fall um eine Einrichtung, die ein Bild einer hierüber betrachteten Szenerie liefert. In dem Bild sind diverse Gegenstände gezeigt, unter anderem ein vom Truppführer, der die Visiereinrichtung 2 bedient, auswählbares Ziel 5. Zur Zielauswahl ist beispielsweise eine entsprechende Taste 6 vorgesehen, über die, gegebenenfalls über zusätzliche weitere Tasten, eine im Bild dargestellte Markierung bewegt werden kann, worauf nachfolgend noch eingegangen wird, um im Bild das entsprechende Ziel 5 zu markieren.

Die Visiereinrichtung 2 umfasst weiterhin eine Einrichtung 7 zur Entfernungsmessung, vornehmlich einen Laserentfernungsmesser. Dieser misst automatisch die Entfernung d der Visiereinrichtung 2 zum Ziel 5. Der Entfernungsmesswert d wird einer ballistischen Recheneinrichtung 8 gegeben, die gestützt hierauf anhand ballistischer Gesetzmäßigkeiten und Rechenregeln sowie geschoßspezifischer Parameter einen Soll-Elevationswinkel εₛₒₗₗ errechnet, also den Elevationswinkel, der seitens des Mörsers 4 einzurichten ist, um die darüber abgeschossene Granate ins Ziel 5 zu lenken.

Vorgesehen ist seitens der Visiereinrichtung 2 ferner eine Einrichtung 9 zur Bestimmung eines Soll-Azimutwinkels α_{soll,} also eines seitlichen Ausrichtwinkels, mit dem der Mörser 4 auszurichten ist. Diese Einrichtung 9 ist bevorzugt ein elektronischer Kompass, der in einem definierten Koordinatensystem die Winkelinformation ermittelt. Vorgesehen ist ferner eine Kommunikationseinrichtung 10, beispielsweise ein Transponder oder eine Bluetooth-Schnittstelle, die eine Datenübertragung zu einer entsprechenden Kommunikationseinrichtung an der Waffe 3 ermöglicht, worauf nachfolgend noch eingegangen wird. Über diese Kommunikationseinrichtung werden die ermittelten Soll-Winkel aₛₒₗₗ und εₛₒₗₗ an die entsprechende Kommunikationseinrichtung der Waffe 3 übermittelt, wo diese Daten sodann weiterverarbeitet werden.

Vorgesehen sind seitens der Visiereinrichtung ferner eine oder mehrere Auswahltasten 11, die es ermöglicht, eine bestimmte Waffe 3 auszuwählen, die über die Kommunikationseinrichtung 10 der Visiereinrichtung Daten empfangen soll. Dies ist dann erforderlich, wenn innerhalb der Kampfgruppe mehrere von Hand auszurichtende Waffen 3 vorgesehen sind, und jede dieser Waffen das Soll-Winkel-Paar zur genauen Ausrichtung empfangen soll. Dieses Soll-Winkel-Paar kann sich entweder auf dasselbe Ziel beziehen, denkbar ist es aber auch, der ersten Waffe ein erste Ziel und der zweiten Waffe ein zweites Ziel zuzuordnen, dann selbstverständlich mit anderen Soll-Winkeln.

Die Waffe 3 verfügt wie ausgeführt ebenfalls über eine Kommunikationseinrichtung 12, die die von der Kommunikationseinrichtung übertragenen Daten (α_{soll,} εₛₒₗₗ) 10 empfängt. Beide Kommunikationseinrichtungen 10, 12 sind zwingend miteinander registriert, sei es durch von Haus aus feste Zuordnung, sei es durch eine entsprechende Möglichkeit zur Vor-Ort-Konfiguration der Steuerungseinrichtung 10 über eine entsprechende Registrierung oder dergleichen.

Die empfangenen Soll-Winkel αₛₒₗₗ, εₛₒₗₗ werden einer Recheneinrichtung 13 gegeben, die diese der weiteren Verarbeitung zugrunde legt.

Die Waffe 3 verfügt über eine Einrichtung 14 zur kontinuierlichen Bestimmung des Ist-Azimutwinkels α_{ist,} wobei die Ermittlung von αᵢₛₜ im selben Koordinatensystem wie die Ermittlung von αₛₒₗₗ erfolgt, damit eine Vergleichbarkeit gegeben ist. Dies ist bei Verwendung von elektrischen Kompassen als Einrichtungen 9, 14 ohne weiteres sichergestellt, da beide Kompasse in einem definierten Koordinatensystem arbeiten, wobei üblicherweise die Himmelsrichtung "Ost" als 0°-Richtung definiert ist. Die kontinuierlich erfassten αᵢₛₜ-Werte werden der Recheneinrichtung 13 gegeben. Ebenfalls kontinuierlich ermittelt wird der Ist-Elevationswinkel ε_{ist,} wozu eine Einrichtung 15 in Form eines elektronischen Neigungssensors dient, der die Neigung des Mörser-Rohres relativ zur Horizontalebene ermittelt.

Seitens der Recheneinrichtung 13 liegen nun zum einen die beiden Soll-Winkel α_{soll,} εₛₒₗₗ vor, zum anderen kontinuierlich die beiden ermittelten Ist-Winkel α_{ist,} εᵢₛₜ. Die Recheneinrichtung 13 vergleicht nun kontinuierlich, ob αᵢₛₜ = αₛₒₗₗ und εᵢₛₜ= εₛₒₗₗ, wobei den beiden Soll-Winkeln αₛₒₗₗ, εₛₒₗₗ jeweils ein gewisser Toleranzwinkelwert, beispielsweise +/- 0,25°, +/- 0,5° oder +/- 1,0° zugeordnet ist. Eine Gleichheit von Ist-Winkel und Soll-Winkel wird also dann angenommen, wenn der Ist-Winkel sich innerhalb des Toleranzbereichs von αₛₒₗₗ respektive εₛₒₗₗ liegt. Ist eine Übereinstimmung des Azimutwinkels und/oder des Elevationswinkels gegeben, so wird die jeweilige Übereinstimmung über eine optische Anzeigeeinrichtung 16 und/oder eine akustische Anzeigeeinrichtung 17, sofern eine solche vorgesehen ist, dem Schützen, der den Mörser 4 im Raum ausrichtet, angezeigt. Sobald er folglich die Information erhält, dass einer der beiden Winkel der Soll-Vorgabe entspricht, ist lediglich noch der andere Winkel auszurichten. Stimmen beide Winkel überein, kann unmittelbar darauf der Schuss erfolgen. Das subjektive Abschätzen einer Schussrichtung ist nicht mehr erforderlich, auch benötigt der die Waffe bedienende Soldat keinen Sichtkontakt zum Ziel, sondern kann in Deckung bleiben, da der einzige Sichtkontakt zum Ziel seitens der Visiereinrichtung 2 gegeben sein muss. Da das System davon ausgeht, dass Visiereinrichtung 2 und Waffe 3 sehr eng beieinander positioniert sind, und üblicherweise ein Abstand von nur sehr wenigen Metern gegeben ist, können, nicht zuletzt im Hinblick auf die große Entfernung, die Soll-Winkel, die bezogen auf die Position der Visiereinrichtung 2 ermittelt wurden, auch der Ausrichtung der Waffe 3 zugrunde gelegt werden. Die Kommunikation ist auf sehr wenige Meter begrenzt, sie ist störungssicher, ein jamming ist nicht möglich, insbesondere ist auch keine Abhängigkeit von größeren Feuerleitverbunden und ähnliches gegeben.

Wie beschrieben, geht die Feuerleiteinrichtung davon aus, dass Visiereinrichtung 2 und Waffe 3 nur wenige Meter, beispielsweise zwei bis drei Meter, voneinander beabstandet sind. Ist ein größerer Abstand, beispielsweise vier, fünf oder sechs Meter gegeben, so besteht die Möglichkeit, wie in Fig. 1 exemplarisch dargestellt ist, ein Korrekturmodul 18 anzuwählen, das entweder der Recheneinrichtung 8 zugeordnet oder in dieser implementiert ist. Über dieses Korrekturmodul ist es möglich, die Soll-Winkel αₛₒₗₗ und εₛₒₗₗ etwas hinsichtlich der Position respektive dem Abstand des Mörsers 4 relativ zur Visiereinrichtung 2 zu korrigieren. Hierbei besteht die Möglichkeit, über ein geeignetes Anwahlmittel wie eine Taste oder Ähnliches nach Anwahl des Korrekturmoduls 18 oder allgemein dieses Korrekturmodus einzugeben, ob die Waffe 3 rechts, links oder vor der Visiereinrichtung 2 positioniert ist, mithin eine Korrektur der Soll-Winkel "nach rechts", "nach links" oder "nach vorne" erfolgen soll. Gegebenenfalls sind unterschiedlichen Abständen unterschiedliche Korrekturfaktoren zugeordnet und wählbar, das heißt, der Truppführer muss lediglich noch schätzen, ob der jeweilige Schütze nun vier, fünf oder sechs Meter entfernt ist, um dann den entsprechenden abstandsbezogenen Korrekturwert anzuwählen. Über diesen Korrekturwert werden sodann die ermittelten Soll-Winkel korrigiert, sofern dies erforderlich ist, wobei die Korrekturen eher marginal. Die Implementierung eines solchen Korrekturmoduls 18 ist optional und keineswegs zwingend erforderlich.

Die Recheneinrichtung 13 kann ferner über eine Speichereinrichtung verfügen, in der die Soll-Winkel abrufbar gespeichert werden können. Für einen Folgeschuss kann der Schütze die Soll-Winkel abrufen und gegebenenfalls die Ist-Winkeleinstellung selber etwas korrigieren, jedoch aufbauend auf den Soll-Winkeln.

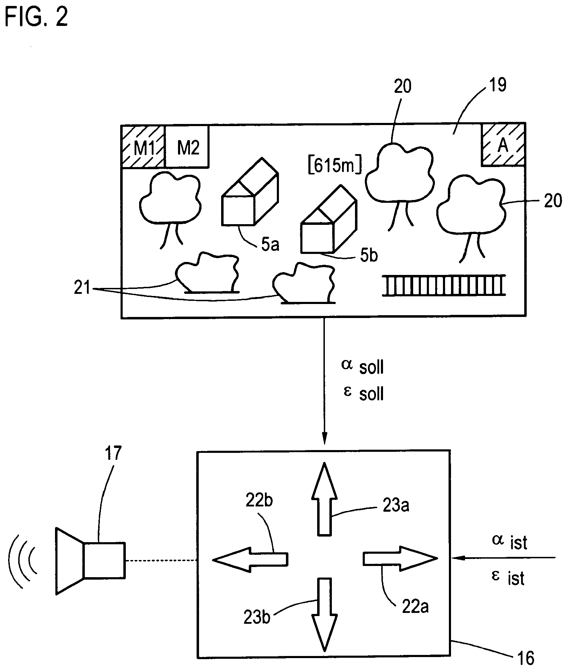

Fig. 2 zeigt in Form einer Prinzipdarstellung ein über die Visiereinrichtung 2 sichtbares Bild 19, wie es der Truppführer sieht. Im gezeigten Beispiel sind zwei Ziele 5a und 5b sichtbar, wie auch weitere Geländestrukturen in Form von Bäumen 20, Gebüschen 21 und ähnlichem.

Im Bild links oben werden die beiden anwählbaren Waffen M1 und M2, also "Mörser 1" und "Mörser 2", dargestellt, wobei hier davon ausgegangen wird, dass der Truppführer über die Taste 6 den Mörser M1, wie durch die Strichelung des Feldes angedeutet, angewählt hat.

Ferner wird hier angenommen, dass der Truppführer über die Taste 6 das Ziel 5b ausgewählt hat, wie durch das rechts oben gezeigte, gestrichelt unterlegte Auswahlfeld A dargestellt ist. Die Entfernungsmesseinrichtung 7, also die Lasermesseinrichtung, hat unmittelbar daraufhin die Entfernung zum Ziel 5b ermittelt, im gezeigten Beispiel 615 m. Die ballistische Recheneinrichtung 8 ermittelt nun ausgehend von dieser Entfernung umgehend den Soll-Elevationswinkel εₛₒₗₗ. Parallel hierzu hat die Azimutwinkel-Erfassungseinrichtung 9, also beispielsweise der elektronische Kompass, den Soll-Azimutwinkel αₛₒₗₗ ermittelt. Beide werden nun über die Kommunikationseinrichtung 10 an die Kommunikationseinrichtung 12 an der Waffe übertragen, wo kontinuierlich der Ist-Azimutwinkel αᵢₛₜ über die dortige Azimutwinkel-Erfassungseinrichtung 14, also ebenfalls über einen elektronischen Kompass, wie auch der Ist-Elevationswinkel εᵢₛₜ über die Erfassungseinrichtung 15, also den elektronischen Neigungssensor, ermittelt wird. Die dortige Recheneinrichtung 13 nimmt nun einen kontinuierlichen Soll-Ist-Vergleich vor und visualisiert das Ergebnis an der optischen Anzeigeeinrichtung 16. Hier werden beispielsweise Pfeile dargestellt, die die jeweils erforderliche Bewegung des Mörser-Rohres visualisieren. Die beiden Pfeile 22a, 22b zeigen an, inwieweit das Rohr um seinen bodenseitigen Schwenkpunkt zur Veränderung des Ist-Azimutwinkels αᵢₛₜ zu bewegen ist. Eine Darstellung des Pfeils 22a bedeutet, dass eine Verschwenkung nach rechts erforderlich ist, die Darstellung des Pfeils 22b bedeutet, dass eine Verschwenkung nach links erforderlich ist, um sich dem Soll-Azimutwinkel zu nähern.

Die beiden Pfeile 23a, 23b geben an, in welcher Richtung das Rohr zur Veränderung des Ist-Elevationswinkels εᵢₛₜ zu bewegen ist. Der Pfeil 23a gibt beispielsweise an, dass das Rohr mit seinem freien Ende anzuheben ist, während der Pfeil 23b ein Absenken anzeigt. Es versteht sich von selbst, dass nur einer der beiden Pfeile 22a, 22b und nur einer der beiden Pfeile 23a, 23b angezeigt wird, je nach dem wie der jeweilige Ist-Winkel gemessen wird. Ergibt sich eine Übereinstimmung zwischen einem Ist-Winkel und einem Soll-Winkel, so erlischt beispielsweise der jeweilige Pfeil, oder er ändert seine Farbe, beispielsweise von rot nach grün oder dergleichen, um dem Schützen zu visualisieren, dass der Winkel korrekt ausgerichtet ist.

Parallel dazu kann, sofern vorgesehen und wie über die gestrichelte Linie dargestellt ist, auch eine akustische Visualisierung über die Anzeigeeinrichtung 17 durch sich verändernde Töne und dergleichen erfolgen.

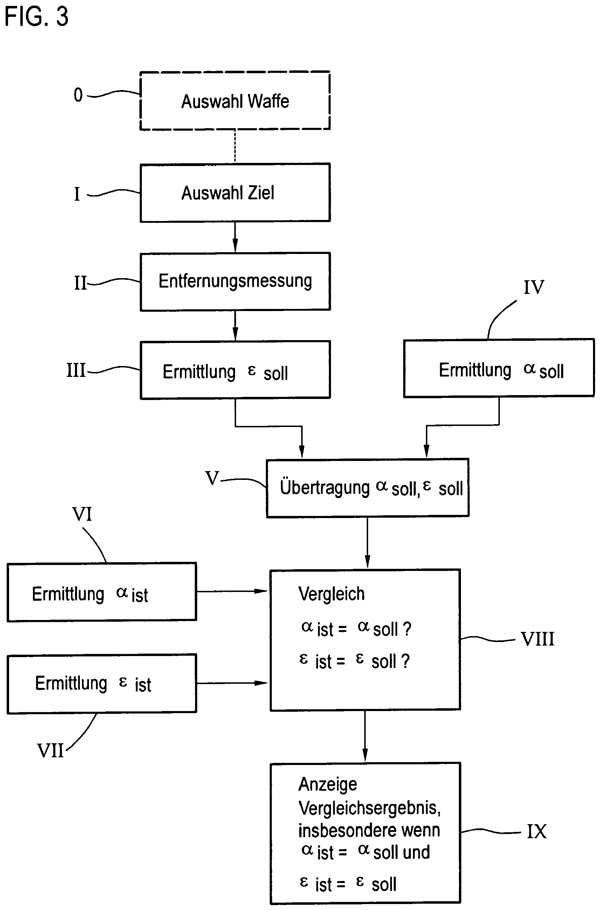

Fig. 3 zeigt in Form eines Flussdiagramms den Funktionsablauf des erfindungsgemäßen Feuerleitsystems. Im hier nur gestrichelt weil nicht zwingenden Schritt 0 erfolgt die Auswahl der anzusprechenden Waffe, sofern eine solche Auswahl überhaupt möglich ist, das heißt, dass dieser Schritt optional ist. Im Schritt I erfolgt die Auswahl des Ziels über die optische Visiereinrichtung 2. Nach erfolgter Zielauswahl folgt dem Schritt II die Entfernungsmessung sowie im Schritt III hierauf gestützt die Ermittlung des Soll-Elevationswinkels ε_{sooll.} Parallel hierzu erfolgt im Schritt IV die Ermittlung des Soll-Azimutwinkels α_{soll.} Beide Soll-Winkel αₛₒₗₗ, εₛₒₗₗ werden sodann im Schritt V an die Kommunikationseinrichtung der Waffe übertragen. Sie werden der dortigen Recheneinrichtung gegeben. Waffenseitig erfolgt im Schritt VI die kontinuierliche Ermittlung des Ist-Azimutwinkels αᵢₛₜ, parallel hierzu im Schritt VII die kontinuierliche Ermittlung des Ist-Elevationswinkels εᵢₛₜ. Auch diese Werte werden kontinuierlich der Recheneinrichtung der Waffe gegeben, die als Vergleichseinrichtung stets einen Vergleich zwischen dem jeweiligen Winkel-Ist-Wert und dem zugeordneten Winkel-Soll-Wert vornimmt. Dies geschieht im Schritt VIII. Gemäß Schritt IX wird kontinuierlich das Vergleichsergebnis ausgegeben, verbunden mit Informationen, wie eine entsprechende Winkelnachführung erfolgen muss, sofern keine Übereinstimmung ermittelt wurde, wobei insbesondere natürlich das Vergleichsergebnis ausgegeben wird, wenn der jeweilige Ist-Winkel mit dem jeweiligen Soll-Winkel übereinstimmt.

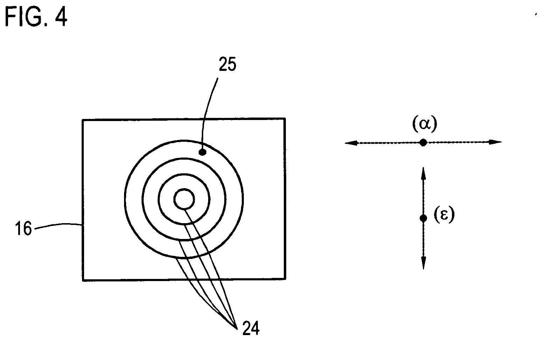

Schließlich zeigt Fig. 4 eine weitere Möglichkeit der Ausgabe des Vergleichsergebnisses über die optische Anzeigeeinrichtung 16. Gezeigt sind hier mehrere konzentrische Kreise 24 sowie ein markanter Punkt 25, der anhand der beiden erfassten Ist-Winkel αᵢₛₜ, εᵢₛₜ ermittelt wurde. Der Punkt 25 wird durch Verschwenken der Waffe 3 respektive des Mörsers 4 nach oben und nach unten respektive zu beiden Seiten hin bewegt, ändert also seine Relativposition zu den festliegenden konzentrischen Kreisen 24. Eine Bewegung von rechts nach links erfolgt durch eine Veränderung des Ist-Azimutwinkels, wie in Fig. 4 dargestellt ist. Eine Bewegung des Punktes 25 von oben nach unten erfolgt durch eine Veränderung des Ist-Elevationswinkels, wie in Fig. 4 dargestellt ist. Auf diese Weise wird dem Schützen unmittelbar visualisiert, wie sich die Bewegung der Waffe hinsichtlich einer Annäherung der Ist-Winkel an die Soll-Winkel auswirkt. Die Waffe ist dann korrekt ausgerichtet, wenn der Punkt 25 im Inneren des konzentrischen innersten Kreises liegt.

## Patentansprüche

1. Feuerleiteinrichtung für wenigstens eine von Hand auszurichtende Waffe, insbesondere einen Mörser, umfassend:
- eine optische Visiereinrichtung (2) mit einer Einrichtung (7) ausgelegt zur Messung der Entfernung zu einem ausgewählten Ziel (5) und einer Einrichtung (9) ausgelegt Bestimmung eines waffenseitig auszurichtenden Soll-Azimutwinkels (αₛₒₗₗ) zum ausgewählten Ziel
- eine Recheneinrichtung (8) ausgelegt zur Ermittlung wenigstens eines bezüglich des ausgewählten Ziels (5) waffenseitig auszurichtenden Soll-Elevationswinkels (εₛₒₗₗ) anhand der gemessenen Entfernung (d),
- Kommunikationsmittel (10, 12) an der Visiereinrichtung (2) und an der Waffe (3) ausgelegt zur drahtlosen Datenübertragung,
- eine an der Waffe (3) vorgesehene Einrichtung (14) ausgelegt zur Bestimmung des Ist-Azimutwinkels (αᵢₛₜ) der im Raum ausgerichteten Waffe (3),
- eine an der Waffe (3) vorgesehene Einrichtung (15) ausgelegt zur Bestimmung des Ist-Elevationswinkels (εᵢₛₜ) der im Raum ausgerichteten Waffe (3),
- an der Waffe vorgesehene Anzeigemittel (16, 17) ausgelegt zur Anzeige der Übereinstimmung des Ist-Azimutwinkels (αᵢₛₜ) mit dem Soll-Azimutwinkel (αₛₒₗₗ) und des Ist-Elevationswinkels (εᵢₛₜ) mit dem Soll-Elevationswinkel (εₛₒₗₗ), und
- eine waffenseitig vorgesehene Speichereinrichtung ausgelegt zum Speichern der Soll-Winkel (αₛₒₗₗ, εₛₒₗₗ), aus welcher die Soll-Winkel (αₛₒₗₗ, εₛₒₗₗ) eines vorausgehenden Schusses aus der Waffe (3) für einen weiteren Ausrichtvorgang für einen Folgeschuss abrufbar sind.

2. Feuerleiteinrichtung nach Anspruch 1,
wobei die Recheneinrichtung (8) an der optischen Visiereinrichtung (2) vorgesehen ist, wobei als Daten der Soll-Azimutwinkel (αₛₒₗₗ) und der Soll-Elevationswinkel (εₛₒₗₗ) übertragen werden.

3. Feuerleiteinrichtung nach Anspruch 1,
wobei die Recheneinrichtung (8) an der Waffe (3) vorgesehen ist, wobei als Daten der Soll-Azimutwinkel (αₛₒₗₗ) und die gemessene Entfernung (d) übertragen werden.

4. Feuerleiteinrichtung nach einem der vorangehenden Ansprüche,
wobei ein Korrekturmodul (18) vorgesehen ist, durch welches bei der Ermittlung des Soll-Azimutwinkels (αₛₒₗₗ) und/oder des Soll-Elevationswinkels (εₛₒₗₗ) ein eine Winkelkorrektur im Hinblick auf den gegebenen Abstand der Visiereinrichtung (2) zur Waffe (3) erwirkender Korrekturfaktor berücksichtigt werden kann, wobei die Berücksichtigung des Korrekturfaktors gegebenenfalls wählbar ist.

5. Feuerleiteinrichtung nach Anspruch 4,
wobei mehrere wählbare Korrekturfaktoren, die jeweils bestimmten Abständen zugeordnet sind, vorgesehen sind.

6. Feuerleiteinrichtung nach einem der vorangehenden Ansprüche,
wobei die Einrichtung (7) zur Entfernungsmessung eine Lasermesseinrichtung ist.

7. Feuerleiteinrichtung nach einem der vorangehenden Ansprüche,
wobei die jeweilige Einrichtung (9, 14) zur Bestimmung des Ist-Azimutwinkels (αᵢₛₜ) und des Soll-Azimutwinkels (αₛₒₗₗ) ein elektronischer Kompass ist.

8. Feuerleiteinrichtung nach eine der vorangehenden Ansprüche,
wobei die Einrichtung (15) zur Bestimmung des Ist-Elevationswinkels (εᵢₛₜ) ein Neigungsmesser ist.

9. Feuerleiteinrichtung nach einem der vorangehenden Ansprüche,
wobei als Anzeigeeinrichtung (16, 17) eine optische und/oder eine akustische Anzeigeeinrichtung vorgesehen ist.

10. Feuerleiteinrichtung nach Anspruch 9,
wobei die optische Anzeigeeinrichtung (16) das Erreichen des Soll-Azimutwinkels (αₛₒₗₗ) und des Soll-Elevationswinkels (εₛₒₗₗ) durch einen Farbwechsel oder durch Symbole anzeigt.

11. Feuerleiteinrichtung nach Anspruch 9 oder 10,
wobei die akustische Anzeigeeinrichtung (17) das Erreichen des Soll-Azimutwinkels (αₛₒₗₗ) und des Soll-Elevationswinkels (εₛₒₗₗ) durch einen Wechsel der Tonfrequenz oder der Tonfolge anzeigt.

12. Feuerleiteinrichtung nach einem der vorangehenden Ansprüche,
wobei die Kommunikationsmittel (10, 12) an der Visiereinrichtung (2) und an der Waffe (3) vorgesehene Transponder oder Bluetooth-Schnittstellen umfassen.

13. Feuerleiteinrichtung nach einem der vorangehenden Ansprüche,
wobei an der Visiereinrichtung (2) ein Auswahlmittel ausgelegt zum Auswählen einer bestimmten Waffe (3) aus mehreren wählbaren Waffen (3), zu denen über die entsprechenden Kommunikationsmittel (10, 12) eine Datenübertragung möglich ist, vorgesehen sind.

14. Feuerleiteinrichtung nach Anspruch 13,
wobei die waffenseitigen Kommunikationsmittel (12) mit dem visiereinrichtungsseitigen Kommunikationsmittel (10) registriert sind.

## Claims

1. Fire control mechanism for at least one manually aimed weapon, particularly a mortar, comprising:
- a visual sighting device (2) with a mechanism (7) designed for measuring the distance to a chosen target (5) and a mechanism (9) designed for determining a nominal azimuth angle (αₙₒₘ) to the chosen target for aiming the weapon,
- a calculating device (8) designed for determining at least one nominal elevation angle (εₙₒₘ) from the measured distance (d) for aiming the weapon in relation to the chosen target (5),
- communications means (10, 12) on the sighting device (2) and on the weapon (3) designed for wireless data transmission,
- a mechanism (14) provided on the weapon (3) designed for determining the actual azimuth angle (factual) of the weapon (3) aimed within space,
- a mechanism (15) provided on the weapon (3) designed for determining the actual elevation angle (ε_{actual}) of the weapon (3) aimed within space,
- display means (16, 17) provided on the weapon designed to indicate agreement between the actual azimuth angle (α_{actual}) and the nominal azimuth angle (αₙₒₘ) and the actual elevation angle (ε_{actual}) and the nominal elevation angle (εₙₒₘ), and
- a storage device designed for storing the nominal angles (αₙₒₘ, εₙₒₘ) and provided in the weapon, from which the nominal angles (αₙₒₘ, εₙₒₘ) of a preceding fire from the weapon (3) for a further aiming process for subsequent firing can be retrieved.

2. Fire control mechanism according to Claim 1,
wherein the calculating device (8) is provided on the visual sighting device (2), wherein the nominal azimuth angle (αₙₒₘ) and the nominal elevation angle (εₙₒₘ) are transmitted as data.

3. Fire control mechanism according to Claim 1,
wherein the calculating device (8) is provided on the weapon (3), wherein the nominal azimuth angle (αₙₒₘ) and the measured distance (d) are transmitted as data.

4. Fire control mechanism according to one of the preceding claims,
wherein an adjustment module (18) is provided, by means of which, when determining the nominal azimuth angle (αₙₒₘ) and/or the nominal elevation angle (εₙₒₘ), an adjustment factor obtained from an angle adjustment with regard to the distance between the sighting device (2) and the weapon (3) can be taken into account, consideration of the adjustment factor being optional if possible.

5. Fire control mechanism according to Claim 4,
wherein several selectable adjustment factors assigned to different intervals in each case are provided.

6. Fire control mechanism according to one of the preceding claims,
wherein the mechanism (7) for measuring distance is a laser measuring device.

7. Fire control mechanism according to one of the preceding claims,
wherein the mechanism (9, 14) for determining the actual azimuth angle (α_{actual}) and the nominal azimuth angle (αₙₒₘ), respectively, is an electronic compass.

8. Fire control mechanism according to one of the preceding claims,
wherein the mechanism (15) for determining the actual elevation angle (ε_{actual}) is an inclinometer.

9. Fire control mechanism according to one of the preceding claims,
wherein a visual and/or audible indicator device is provided as the indicator device (16, 17).

10. Fire control mechanism according to Claim 9,
wherein the visual indicator device (16) shows when the nominal azimuth angle (αₙₒₘ) and the nominal elevation angle (εₙₒₘ) has been reached by means of a colour change or using symbols.

11. Fire control mechanism according to Claim 9 or 10,
wherein the audible indicator device (17) signals that the nominal azimuth angle (αₙₒₘ) and the nominal elevation angle (εₙₒₘ) have been reached by means of a change in audio frequency or sequence.

12. Fire control mechanism according to one of the preceding claims,
wherein the communications means (10, 12) comprises transponders or Bluetooth interfaces provided on the sighting device (2) and on the weapon (3).

13. Fire control mechanism according to one of the preceding claims,
wherein a selection means is provided on the sighting device (2) which selection means is designed for selecting a particular weapon (3) from several available weapons (3), to which data transmission is possible using corresponding communications means (10, 12) .

14. Fire control mechanism according to Claim 13,
wherein the communications means (12) on the weapon is registered with the communications means (10) on the sighting device.

## Revendications

1. Dispositif de conduite de tir pour au moins une arme à orienter manuellement, notamment un mortier, comprenant :
- un dispositif de visée (2) optique muni d'un dispositif (7) conçu pour mesurer la distance par rapport à une cible (5) sélectionnée et un dispositif (9) destiné à déterminer un angle d'azimut de consigne (αₛₒₗₗ) à orienter au niveau de l'arme vers la cible sélectionnée,
- un dispositif de calcul (8) conçu pour déterminer au moins un angle d'élévation de consigne (εₛₒₗₗ) à orienter au niveau de l'arme par rapport à la cible (5) sélectionnée à l'aide de la distance (d) mesurée,
- des moyens de communication (10, 12) sur le dispositif de visée (2) et sur l'arme (3), conçus pour la transmission de données sans fil,
- un dispositif (14) présent sur l'arme (3), conçu pour déterminer l'angle d'azimut réel (αᵢₛₜ) de l'arme (3) orientée dans l'espace,
- un dispositif (15) présent sur l'arme (3), conçu pour déterminer l'angle d'élévation réel (εᵢₛₜ) de l'arme (3) orientée dans l'espace,
- des moyens d'indication (16, 17) présents sur l'arme, conçus pour indiquer la concordance entre l'angle d'azimut réel (αᵢₛₜ) et l'angle d'azimut de consigne (αₛₒₗₗ) et entre l'angle d'élévation réel (εᵢₛₜ) et l'angle d'élévation de consigne (εₛₒₗₗ), et
- un dispositif de mémorisation présent du côté de l'arme, conçu pour enregistrer les angles de consigne (αₛₒₗₗ, εₛₒₗₗ) et depuis lequel les angles de consigne (αₛₒₗₗ, εₛₒₗₗ) d'un tir précédent depuis l'arme (3) peuvent être interrogés pour une opération d'orientation supplémentaire pour un tir suivant.

2. Dispositif de conduite de tir selon la revendication 1, le dispositif de calcul (8) se trouvant sur le dispositif de visée (2) optique, les données transmises étant l'angle d'azimut de consigne (αₛₒₗₗ) et l'angle d'élévation de consigne (εₛₒₗₗ) .

3. Dispositif de conduite de tir selon la revendication 1, le dispositif de calcul (8) se trouvant sur l'arme (3), les données transmises étant l'angle d'azimut de consigne (αₛₒₗₗ) et la distance (d) mesurée.

4. Dispositif de conduite de tir selon l'une des revendications précédentes, un module de correction (18) étant présent, par le biais duquel un facteur de correction appliquant une correction angulaire en considération de l'écart donné entre le dispositif de visée (2) et l'arme (3) peut être pris en compte lors de la détermination de l'angle d'azimut de consigne (αₛₒₗₗ) et/ou l'angle d'élévation de consigne (εₛₒₗₗ), la prise en compte du facteur de correction pouvant éventuellement être sélectionnée.

5. Dispositif de conduite de tir selon la revendication 4, plusieurs facteurs de correction sélectionnables étant prévus, lesquels sont respectivement associés à des écarts donnés.

6. Dispositif de conduite de tir selon l'une des revendications précédentes, le dispositif (7) destiné à mesurer la distance étant un dispositif de mesure à laser.

7. Dispositif de conduite de tir selon l'une des revendications précédentes, le dispositif (9, 14) respectif destiné à déterminer l'angle d'azimut réel (αᵢₛₜ) et l'angle d'azimut de consigne (αₛₒₗₗ) étant une boussole électronique.

8. Dispositif de conduite de tir selon l'une des revendications précédentes, le dispositif (15) destiné à déterminer l'angle d'élévation réel (εᵢₛₜ) étant un inclinomètre.

9. Dispositif de conduite de tir selon l'une des revendications précédentes, le dispositif d'indication (16, 17) présent étant un dispositif d'indication visuel et/ou sonore.

10. Dispositif de conduite de tir selon la revendication 9, le dispositif d'indication visuel (16) indiquant que l'angle d'azimut de consigne (αₛₒₗₗ) et l'angle d'élévation de consigne (εₛₒₗₗ) a été atteint par un changement de couleur ou par des symboles.

11. Dispositif de conduite de tir selon la revendication 9 ou 10, le dispositif d'indication sonore (17) indiquant que l'angle d'azimut de consigne (αₛₒₗₗ) et l'angle d'élévation de consigne (εₛₒₗₗ) a été atteint par un changement de la fréquence de tonalité ou de la séquence de tonalités.

12. Dispositif de conduite de tir selon l'une des revendications précédentes, les moyens de communication (10, 12) comprenant des transpondeurs ou des interfaces Bluetooth présents sur le dispositif de visée (2) et sur l'arme (3).

13. Dispositif de conduite de tir selon l'une des revendications précédentes, un dispositif de sélection étant présent sur le dispositif de visée (2), lequel est conçu pour sélectionner une arme (3) précise parmi une pluralité d'armes (3) pouvant être sélectionnées, vers laquelle une transmission de données par le biais des moyens de communication (10, 12) correspondants est possible.

14. Dispositif de conduite de tir selon la revendication 13, les moyens de communication côté arme (12) étant enregistrés avec les moyens de communication côté dispositif de visée (10).
